# EUROPEAN PATENT APPLICATION

(11) **EP 3 232 338 A1**
(43) Date of publication of application: **18.10.2017**
(21) Application number: 16734894.5
(22) Date of filing: 04.01.2016
(51) Int. Cl.: G06F 17/30

(54) **CLOUD PLATFORM APPLICATION-ORIENTED SERVICE RECOMMENDATION METHOD, DEVICE AND SYSTEM**

(30) Priority: 05.01.2015 CN 201510004844
(71) Applicant: Huawei Technologies Co., Ltd., Longgang District Shenzhen, Guangdong 518129 (CN)
(72) Inventor: PAN, Fangmin, Shenzhen Guangdong 518129 (CN); LIU, Hewei, Shenzhen Guangdong 518129 (CN); GAO, Chao, Shenzhen Guangdong 518129 (CN)
(74) Representative: Epping - Hermann - Fischer
(86) International application number: PCT/CN2016/070057
(87) International publication number: WO 2016/110234

(57) **Abstract**

A cloud platform application-orientated service recommendation method is disclosed. The method includes: obtaining service status information of a cloud platform (S100), where the service status information includes services respectively used by all applications on the cloud platform and running statuses of the services; obtaining a target service type (S101), where the target service type is a service type required by a target application, and the target application is an application that runs on the cloud platform and requires service recommendation; and obtaining, according to the service status information, a service that matches the target service type, and using the service as a to-be-recommended service (S102). In the foregoing technical solutions, an application developer obtains, in a timely manner, a service that matches a to-be-developed application, so that application development efficiency is improved, a service in use becomes better matched to a usage scenario characteristic of a user, and a degree of matching between a recommended service and a target application is improved.

## Description

### TECHNICAL FIELD

The present invention relates to the field of cloud computing, and in particular, to a cloud platform application-orientated service recommendation method, device, and system.

### BACKGROUND

In a cloud computing era, a service is relative to a user. A developer uses a cloud platform, and the cloud platform serves the developer. Services on the cloud platform refer to some capabilities provided by the cloud platform to applications, for example, a database, a log, and storage. During application development, a user may directly use the services on the platform to implement rapid development.

The cloud platform uses an entire production procedure environment of software development as a service, and provides the service to a user. The cloud platform provides a series of convenient tools to the user in a service manner, to implement life cycle management of the applications, or the services on the cloud platform, such as deployment or hosting of the applications, or integration or publishing of the services. The cloud platform provides a complete end-to-end ecological system for use objects such as an application developer and a service provider. An objective of the cloud platform is to implement that the application provider quickly deploys a launched application, and that the service provider conveniently and quickly hosts and publishes a service, and the like. There is a large quantity of application developers and service developers on the platform. The service developers develop various services, and integrate and host the various services on the cloud platform. Users of these services are application developers. The application developers use the various services provided on the platform to perform rapid development of cloud applications. For example, a ruby application on a cloud platform needs to use a mysql database. A developer may install and deploy a mysql, and then the application uses this mysql. Alternatively, a mysql service provided by the cloud platform may be used, and in this way, the application developer may not care about statuses of, for example, installation, deployment, operation, and maintenance of the mysql, and needs only to focus on the ruby program.

There are a large quantity of service providers on the cloud platform. For a specific service type, these providers provide services. Sometimes, there are a large quantity of services for a same service type. These services of the same type implement similar basic functions, and have some service-specific features and usage characteristics. In the prior art, for a characteristic of massive services on a cloud platform, typical application templates are provided for some typical application and service usage scenarios, and related resources and binding relationships are established according to the templates. A application developer selects an application template from the templates for application deployment. When creating an application, the cloud platform automatically creates a service instance, and binds the service instance to the application.

In this case, the cloud platform cannot provide corresponding templates for some emerging applications and services in a timely manner. In addition, in a service usage process, if an application developer is not satisfied with a currently used service, the application developer can only manually rebind a service that is considered as proper by the application developer, and then tests an effect. Therefore, the application developer cannot obtain, in a timely and accurate manner, a service that matches a to-be-developed application.

### SUMMARY

Embodiments of the present invention provide a cloud platform application-orientated service recommendation method, device, and system, so that a developer obtains, in a timely and accurate manner, a service that matches a to-be-developed application.

According to a first aspect of the embodiments of the present invention, a cloud platform application-orientated service recommendation method is provided. The method includes:
obtaining service status information of a cloud platform, where the service status information includes services respectively used by all applications on the cloud platform and running statuses of the services;
obtaining a target service type, where the target service type is a service type required by a target application, and the target application is an application that runs on the cloud platform and requires service recommendation; and
obtaining, according to the service status information, a service that matches the target service type, and using the service as a to-be-recommended service.

With reference to the first aspect, in a first possible implementation manner of the first aspect, the obtaining, according to the service status information, a service that matches the target service type, and using the service as a to-be-recommended service includes:
generating, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type; or generating, according to a recommendation policy configuration library, recommendation policy dimensions corresponding to various service types on the cloud platform, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type; and obtaining to-be-statistically-collected recommendation policy dimensions according to the generated recommendation policy dimensions corresponding to the various services on the cloud platform, where the to-be-statistically-collected recommendation policy dimensions are recommendation policy dimensions corresponding to the service type required by the application;
collecting service status matching score statistics on each service of the target service type in the target recommendation policy dimensions according to the service status information, to obtain a service status matching score of each service, where the matching score reflects a degree of matching between a statistical dimension of a running status of each service and the at least one service status statistical dimension included in the recommendation policy dimensions, and a higher matching score indicates a higher degree of matching; and
comparing service status matching scores of all services, and using a service with a highest matching score as the to-be-recommended service.

With reference to the first aspect, in a second possible implementation manner of the first aspect, the obtaining, according to the service status information, a service that matches the target service type, and using the service as a to-be-recommended service includes:
generating, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type;
collecting service status matching score statistics on each service of the target service type in the target recommendation policy dimensions according to the service status information, to obtain a service status matching score of each service, where the matching score reflects a degree of matching between a statistical dimension of a running status of each service and the at least one service status statistical dimension included in the recommendation policy dimensions, and a higher matching score indicates a higher degree of matching;
arranging service status matching scores of all services in descending order; and
selecting, starting from a service with a highest score, at least one service of the target service type as the to-be-recommended service.

With reference to the first or the second possible implementation manner of the first aspect, in a third possible implementation manner of the first aspect, the collecting service status matching score statistics on each service of the target service type in the target recommendation policy dimensions according to the service status information, to obtain a service status matching score of each service includes:
collecting service status statistics on each service of the target service type in each dimension of the target recommendation policy dimensions according to the service status information, to obtain a service status of each service in each dimension;
performing scoring calculation on the status of each service in each dimension according to a preset scoring criterion, to obtain a score of each service in each dimension; and
multiplying the score of each service in each dimension by a preset weight, and calculating a sum, to obtain the service status matching score of each service in the target recommendation policy dimensions.

With reference to the first or the second possible implementation manner of the first aspect, in a fourth possible implementation manner of the first aspect, after the collecting service status matching score statistics on each service of the target service type in the target recommendation policy dimensions according to the service status information, to obtain a service status matching score of each service, the method further includes:
calculating a workload of migrating from a currently used service to the to-be-recommended service by the target application, and revising the service status matching score of each service according to a magnitude of the workload, to obtain a revised matching score; and
the comparing service status matching scores of all services, and arranging service status matching scores of all services in descending order includes:
   comparing revised service status matching scores of all the services, and arranging the service status matching scores of all the services in descending order.

With reference to any one of the first aspect or the first to the fourth possible implementation manners of the first aspect, in a fifth possible implementation manner of the first aspect, the method further includes:
pushing the to-be-recommended service to a developer of the target application.

According to a second aspect of the embodiments of the present invention, a cloud platform application-orientated service recommendation device is provided. The device includes:
an information obtaining module, configured to obtain service status information of a cloud platform, where the service status information includes services respectively used by all applications on the cloud platform and running statuses of the services;
a service type obtaining module, configured to obtain a target service type, where the target service type is a service type required by a target application, and the target application is an application that runs on the cloud platform and requires service recommendation; and
a dynamic analysis service recommendation module, configured to obtain, according to the service status information of the cloud platform that is obtained by the information obtaining module, a service that matches the target service type obtained by the service type obtaining module, and use the service as a to-be-recommended service.

With reference to the second aspect, in a first possible implementation manner of the second aspect, the dynamic analysis service recommendation module includes:
a generation unit, configured to generate, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type;
a matching statistics collection unit, configured to collect, according to the service status information of the cloud platform obtained by the information obtaining module, service status matching score statistics on each service of the target service type in the target recommendation policy dimensions generated by the generation unit, to obtain a service status matching score of each service, where the matching score reflects a degree of matching between a statistical dimension of a running status of each service and the at least one service status statistical dimension included in the recommendation policy dimensions, and a higher matching score indicates a higher degree of matching; and
a determining unit, configured to compare service status matching scores of all services obtained by the matching statistics collection unit, and use a service with a highest matching score as the to-be-recommended service.

With reference to the second aspect, in a second possible implementation manner of the second aspect, the dynamic analysis service recommendation module includes:
a generation unit, configured to generate, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type;
a matching statistics collection unit, configured to collect, according to the service status information of the cloud platform obtained by the information obtaining module, service status matching score statistics on each service of the target service type in the target recommendation policy dimensions generated by the generation unit, to obtain a service status matching score of each service, where the matching score reflects a degree of matching between a statistical dimension of a running status of each service and the at least one service status statistical dimension included in the recommendation policy dimensions, and a higher matching score indicates a higher degree of matching;
an arrangement unit, configured to arrange service status matching scores of all services in descending order; and
a selection unit, configured to select, starting from a service with a highest score, at least one service of the target service type as the to-be-recommended service according to the order arranged by the arrangement unit.

With reference to the first possible implementation manner of the second aspect, in a third possible implementation manner of the second aspect, the device further includes:
a revising module, configured to calculate a workload of migrating from a currently used service to the to-be-recommended service by the target application, and revise the service status matching score of each service according to a magnitude of the workload, to obtain a revised matching score; and
the arrangement unit is specifically configured to compare revised service status matching scores of all the services, and arrange the service status matching scores of all the services in descending order.

With reference to the second possible implementation manner of the second aspect, in a fourth possible implementation manner of the second aspect, the device further includes:
a revising module, configured to calculate a workload of migrating from a currently used service to the to-be-recommended service by the target application, and revise the service status matching score of each service according to a magnitude of the workload, to obtain a revised matching score; and
the determining unit is specifically configured to compare revised matching scores obtained by the revising module, and use a service with a highest revised matching score as the to-be-recommended service.

With reference to any one of the second aspect or the first to the fourth possible implementation manners of the second aspect, in a fifth possible implementation manner of the second aspect, the device further includes:
a pushing module, configured to push the to-be-recommended service to a developer of the target application.

With reference to any one of the second aspect or the possible implementation manners of the second aspect, the generation unit may be replaced with the following two units:
a policy dimension generation unit, configured to generate, according to a recommendation policy configuration library, recommendation policy dimensions corresponding to various service types on the cloud platform, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type; and
a to-be-recommended policy dimension unit, configured to obtain to-be-statistically-collected recommendation policy dimensions according to the recommendation policy dimensions that are corresponding to the various services on the cloud platform and generated by the policy dimension generation unit, where the to-be-statistically-collected recommendation policy dimensions are recommendation policy dimensions corresponding to the service type required by the application.

According to a third aspect of the embodiments of the present invention, a cloud platform application-orientated service recommendation system is provided. The system includes a cloud platform and a cloud platform application-orientated service recommendation device, where the cloud platform application-orientated service recommendation device is configured to recommend a service to an application on the cloud platform, and the cloud platform application-orientated service recommendation device is the cloud platform application-orientated service recommendation device according to any one of the second aspect or the first to the fifth possible implementation manners of the second aspect.

In the foregoing technical solutions of the embodiments of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a cloud platform application-orientated service recommendation method according to an embodiment of the present invention;
FIG. 2 is a schematic diagram of a policy configuration library and an organization manner of the policy configuration library according to an embodiment of the present invention;
FIG. 3 is a schematic diagram of configuring and generating corresponding recommendation policy dimensions for various service types on a cloud platform according to an embodiment of the present invention;
FIG. 4 is a flowchart of a cloud platform application-orientated service recommendation method according to an embodiment of the present invention;
FIG. 5A and FIG. 5B are a flowchart of a cloud platform application-orientated service recommendation method according to an embodiment of the present invention;
FIG. 6 is a schematic diagram of a recommendation policy dynamic configuration according to an embodiment of the present invention;
FIG. 7 is a schematic diagram of a recommendation policy dynamic configuration according to an embodiment of the present invention;
FIG. 8 is a schematic diagram of a recommendation policy dynamic configuration according to an embodiment of the present invention;
FIG. 9 is a structural diagram of a cloud platform application-orientated service recommendation device according to an embodiment of the present invention;
FIG. 10 is a structural diagram of a cloud platform application-orientated service recommendation device according to an embodiment of the present invention;
FIG. 11 is a structural diagram of a cloud platform application-orientated service recommendation device according to an embodiment of the present invention;
FIG. 12 is a structural diagram of a cloud platform application-orientated service recommendation device according to an embodiment of the present invention;
FIG. 13 is a structural diagram of a cloud platform application-orientated service recommendation device according to an embodiment of the present invention;
FIG. 14 is a schematic scenario diagram of a cloud platform application-orientated service recommendation method according to an embodiment of the present invention;
FIG. 15 is a structural diagram of a cloud platform application-orientated service recommendation system according to an embodiment of the present invention;
FIG. 16A and FIG. 16B are a flowchart of a cloud platform application-orientated service recommendation method according to an embodiment of the present invention;
FIG. 17 is a structural diagram of a cloud platform application-orientated service recommendation device according to an embodiment of the present invention;
FIG. 18 is a structural diagram of a cloud platform application-orientated service recommendation device according to an embodiment of the present invention;
FIG. 19 is a structural diagram of a cloud platform application-orientated service recommendation device according to an embodiment of the present invention; and
FIG. 20 is a structural diagram of a cloud platform application-orientated service recommendation device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

Generally, a cloud platform provides a mechanism for service binding and usage access. An application is bound to a to-be-used service by using the cloud platform. The platform obtains an access manner of the service, and provides the access manner, in a manner of a universal interface, to the cloud application for access and use. In this entire service use procedure, the application may use the service only by using the interface manner provided by the platform, and does not need to learn specific usage details of the service in advance. The platform provides such a capability: An application uses same or similar interface manners for services of a same type. For a developer, use of a universal interface means that a service can be quickly switched for use.

Before application development, an application developer needs to clearly know a to-be-used service type on the platform. However, during use of a specific service, in one aspect, the application developer needs to clearly know a usage characteristic of an application, and further needs to know a characteristic of each service on the platform; in another aspect, when pre-estimation of a usage scenario of the application is inaccurate, or a user group, a scenario, or the like of the application changes, how to re-select a service suitable for the application needs to be further considered.

For an application and a service on a cloud platform, an embodiment of the present invention provides a cloud platform application-orientated service recommendation method. A usage characteristic of a service bound to an application is detected, a service that best matches the application is selected from services of a same type as the service bound to the application, and the service that best matches the application is pushed to an application developer.

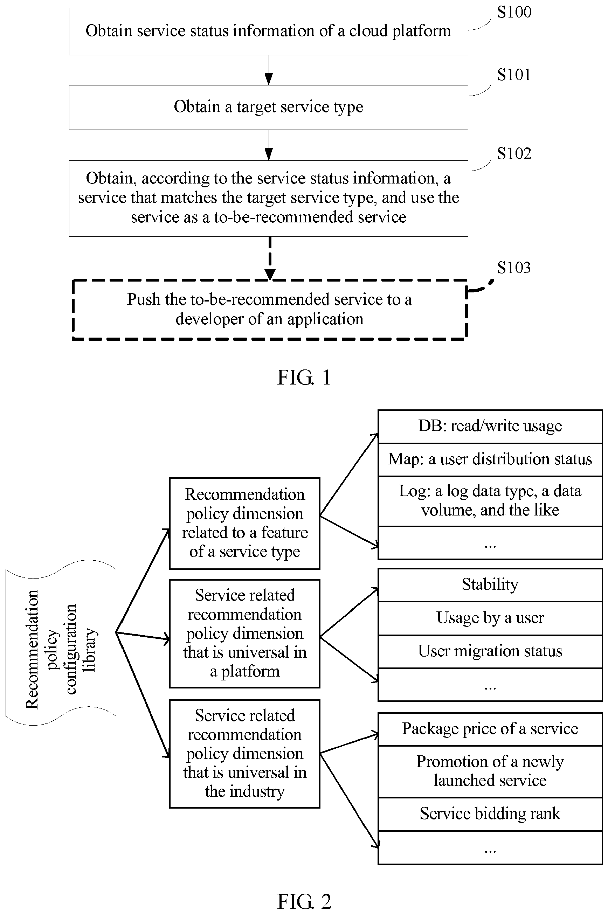

As shown in FIG. 1, the cloud platform application-orientated service recommendation method includes the following steps.

S100. Obtain service status information of a cloud platform, where the service status information includes services respectively used by all applications on the cloud platform and running statuses of the services.

A binding relationship between a cloud application and a cloud service on the platform is implemented by using a cloud controller. Running information of the service and the application is sent to a cloud collector in cloud by using virtual machines/containers hosted by the cloud controller. A service recommendation device collects binding information in the cloud controller and running status information in the cloud collector, obtains, according to an obtained information status, the services respectively used by all the applications on the platform and the running statuses of the services, and further performs analysis to obtain an optimal service of each cloud application.

Optionally, the binding information in the cloud controller and the running status information in the cloud collector may be pushed to the service recommendation device in an active push manner, so that the service recommendation device performs analysis to obtain an optimal service of the cloud application according to a specific information status.

S101. Obtain a target service type, where the target service type is a service type required by a target application, and the target application is an application that runs on the cloud platform and requires service recommendation.

Optionally, the target service type may be obtained by analyzing code of the target application.

Optionally, the target service type may be obtained by analyzing attribute information of the target application.

S102. Obtain, according to the service status information, a service that matches the target service type, and use the service as a to-be-recommended service.

Optionally, recommendation policy dimensions corresponding to various services on the cloud platform may be generated according to recommendation policy information of a recommendation policy configuration library. The recommendation policy configuration library reflects a correspondence between a recommendation policy dimension and a service type.

Optionally, statistical analysis is performed on each service of the service type in the generated recommendation policy dimensions based on the running status information of the application and the service, to obtain a statistical result of each service.

Optionally, statistical results of all services are calculated and compared, and the statistical results of all the services are arranged in descending order.

Optionally, at least one service is selected, starting from a service with a highest statistical score, from all the services of the same type as the to-be-recommended service.

In an embodiment, as shown in the dashed line box in FIG. 1, the method may further include:
S103. Push the to-be-recommended service to a developer of the application.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

To make a person of ordinary skill in the art understand the present invention more vividly, the foregoing policy configuration library is described in an embodiment of the present invention. As shown in FIG. 2, an embodiment of the present invention provides a policy configuration library and an organization manner of the policy configuration library. Some universal recommendation policy dimensions and configuration policies that are related to service recommendation are configured in the recommendation policy configuration library.

Optionally, according to FIG. 2, the recommendation policy dimensions include a recommendation dimension related to a feature of a service type, a service-related recommendation dimension that is universal in a platform, and a service-related recommendation dimension that is universal in the industry. Certainly, optionally, the recommendation policy dimensions may further include another recommendation policy dimension such as a recommendation dimension customized by a user, or a specific recommendation dimension for a service of a specific type. This is not particularly limited in this embodiment of the present invention.

Optionally, each type of recommendation policy dimension further includes many specific recommendation dimensions. As shown in FIG. 2, a recommendation policy dimension related to a characteristic of a service type is used as an example. For a database (Data Base, DB for short) service, a recommendation dimension of read/write usage may be included; for a map (Map) service, a recommendation dimension of a user distribution status may be included; for a log (Log) service, a recommendation dimension of a log data type and a data volume may be included.

A recommendation policy dimension that is universal in the platform may include recommendation dimensions such as stability of a service of this type, usage by the user, and a user migration status.

A recommendation policy dimension that is universal in the industry may include recommendation dimensions such as a package price of a service of this type, promotion of a newly launched service, and a service bidding rank.

Optionally, a weight coefficient of service recommendation is configured for each recommendation policy. In a specific service recommendation process, a specific recommendation policy and a corresponding weight coefficient are obtained, a final recommendation service list is calculated, and the final recommendation service list is used as a recommendation result and sent to a developer of an application that requires service recommendation.

For example, a service of a database type has recommendation policies such as read/write usage, a user distribution status, a data type, stability, and usage. The database service may include an SQL database service, or may include an MSQL database service, or may include an Oracle database service. Statistical results of all the database services in the foregoing recommendation policy dimensions may be different from each other. According to a characteristic of an application, for each service, each recommendation policy is multiplied by a weight coefficient, then comparison is made, and a preferable service or a service that meets a user requirement is found according to this result.

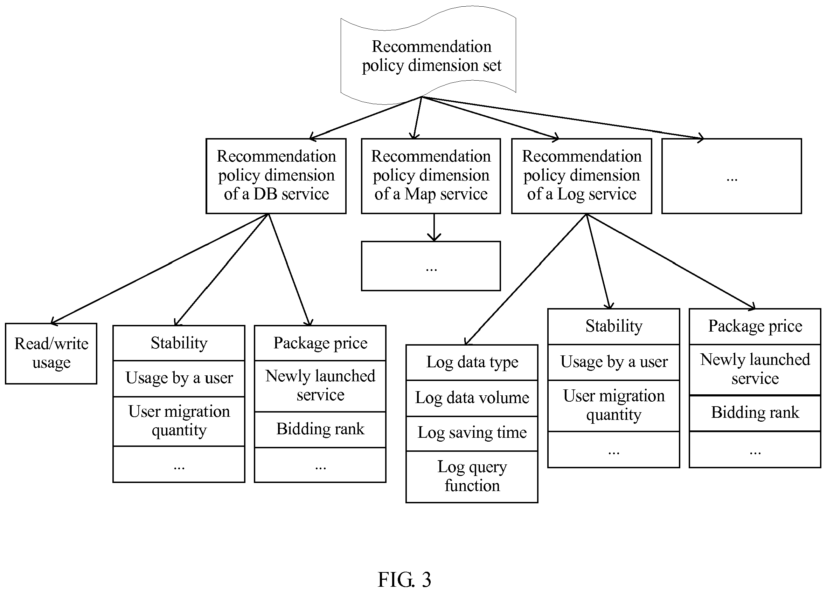

Optionally, as shown in FIG. 3, corresponding recommendation policy dimensions are configured and generated for various service types on a cloud platform by reading the recommendation policy configuration library in FIG. 2.

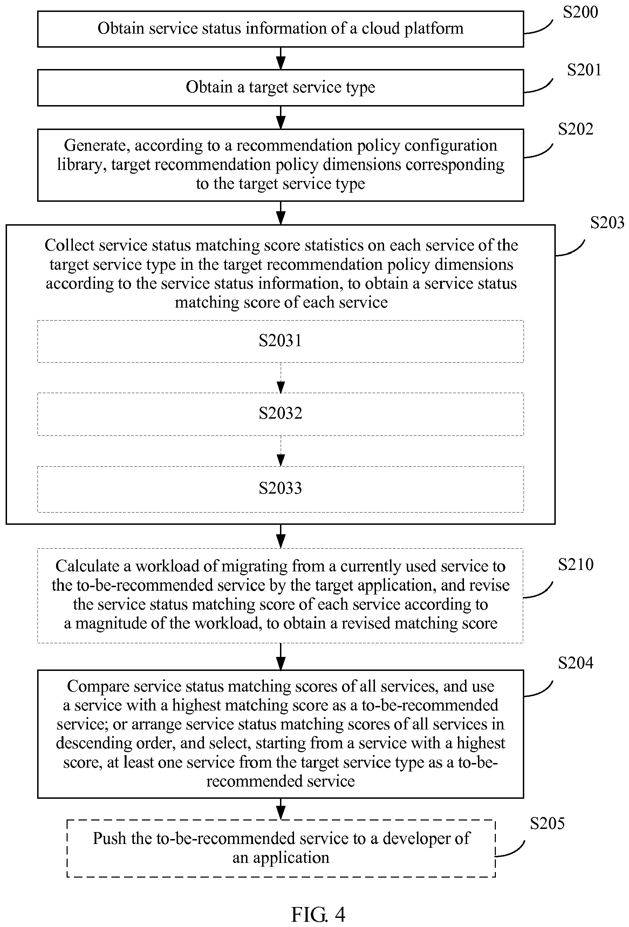

As shown in FIG. 4, an embodiment of the present invention provides a cloud platform application-orientated service recommendation method, including the following steps.

S200. Obtain service status information of a cloud platform, where the service status information includes services respectively used by all applications on the cloud platform and running statuses of the services.

S201. Obtain a target service type, where the target service type is a service type required by a target application, and the target application is an application that runs on the cloud platform and requires service recommendation.

S202. Generate, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type.

S203. Collect service status matching score statistics on each service of the target service type in the target recommendation policy dimensions according to the service status information, to obtain a service status matching score of each service, where the matching score reflects a degree of matching between a statistical dimension of a running status of each service and the at least one service status statistical dimension included in the recommendation policy dimensions, and a higher matching score indicates a higher degree of matching.

Optionally, as shown in the dashed line boxes in FIG. 4, S203 may include:

S2031. Collect service status statistics on each service of the target service type in each dimension of the target recommendation policy dimensions according to the service status information, to obtain a service status of each service in each dimension.

S2032. Perform scoring calculation on the status of each service in each dimension according to a preset scoring criterion, to obtain a score of each service in each dimension.

S2033. Multiply the score of each service in each dimension by a preset weight, and calculate a sum, to obtain the service status matching score of each service in the target recommendation policy dimensions.

S204. Compare service status matching scores of all services, and use a service with a highest matching score as a to-be-recommended service.

Optionally, in an embodiment, S204 may be replaced with the following step:
arranging service status matching scores of all services in descending order, and selecting, starting from a service with a highest score, at least one service of the target service type as a to-be-recommended service.

Optionally, after step S203, the method may further include:
S210. Calculate a workload of migrating from a currently used service to the to-be-recommended service by the target application, and revise the service status matching score of each service according to a magnitude of the workload, to obtain a revised matching score.

In this case, the matching scores used in step S204 are revised matching scores.

Optionally, as shown in the dashed line box in FIG. 4, the method may further include:
S205. Push the to-be-recommended service to a developer of the target application.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

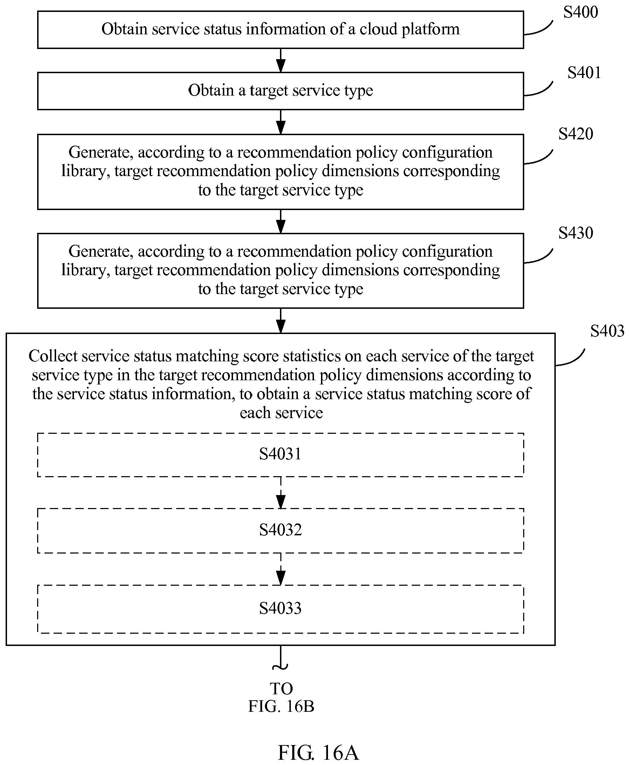

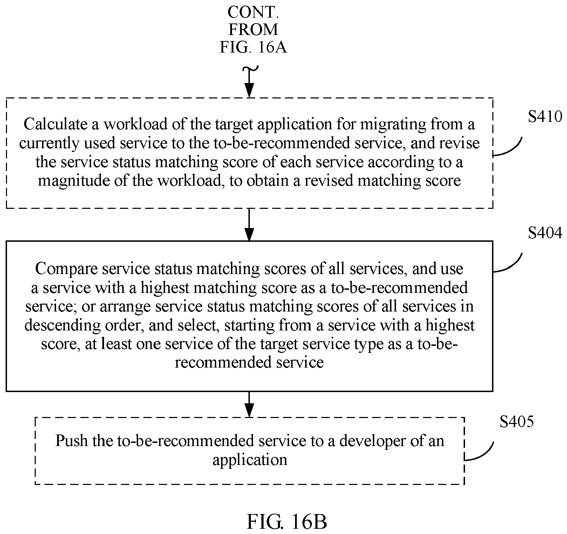

As shown in FIG. 16A and FIG. 16B, an embodiment of the present invention provides a cloud platform application-orientated service recommendation method. A difference between this embodiment and the embodiment corresponding to FIG. 4 lies in that step S202 is replaced with steps S420 and S430 in this embodiment. Other steps are the same as those in the embodiment corresponding to FIG. 4.

The method includes the following steps.

S400 and S401 are respectively the same as steps S200 and S201, and details are not described herein.

S420. Generate, according to a recommendation policy configuration library, recommendation policy dimensions corresponding to various service types on the cloud platform, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type.

S430. Obtain to-be-statistically-collected recommendation policy dimensions according to the recommendation policy dimensions that are corresponding to the various services on the cloud platform and generated in S420, where the to-be-statistically-collected recommendation policy dimensions are recommendation policy dimensions corresponding to the service type required by the application.

It is easily understood that after the recommendation policy dimensions corresponding to the various services on the cloud platform are generated in S420, recommendation policy dimensions corresponding to a service type that is the same as the target service type are obtained by means of matching. The recommendation policy dimensions are the to-be-statistically-collected recommendation policy dimensions.

For example, the target service type is a database service. In this case, recommendation policy dimensions corresponding to the database service may be obtained by means of matching from recommendation policy dimensions corresponding to various services, and the recommendation policy dimensions are used as the to-be-statistically-collected recommendation policy dimensions.

S403, S404, S405, and S410 are respectively the same as S203, S204, S205, and S210, and details are not described herein.

A specific implementation manner of S403 is the same as a specific implementation manner of S203, that is, S4031 to S4033 are respectively the same as S2031 to S2033, and details are not described herein.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

In actual application, a service recommendation process may be classified into two cases:
case 1: service recommendation for an initially deployed application; and
case 2: service recommendation for an application that has ran for a time period. The following describes specific processing procedures of the two processes.

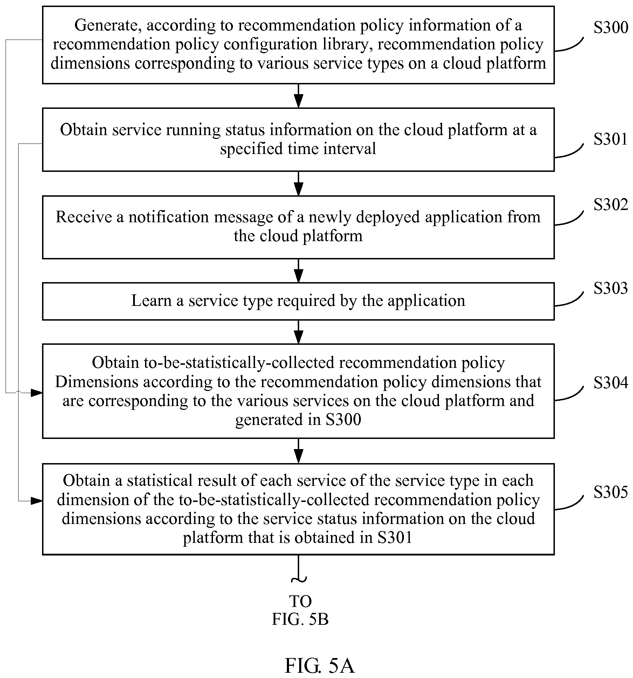

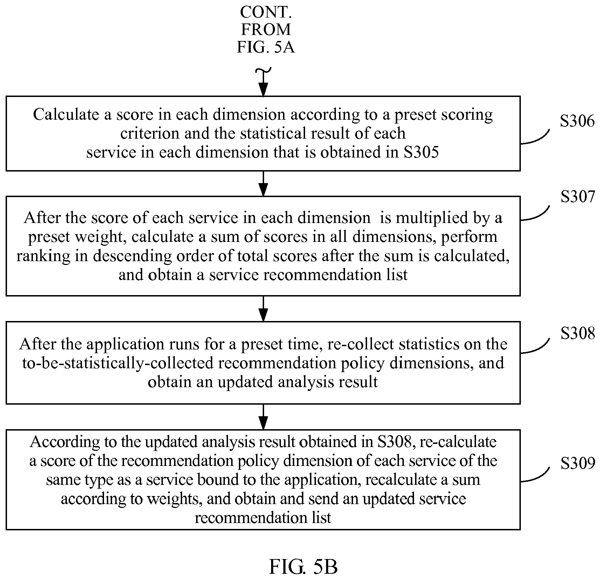

As shown in FIG. 5A and FIG. 5B, an embodiment of the present invention provides a cloud platform application-orientated service recommendation method, including the following steps.

S300. Generate, according to recommendation policy information of a recommendation policy configuration library, recommendation policy dimensions corresponding to various service types on a cloud platform, where the recommendation policy configuration library includes the recommendation policy dimensions corresponding to the various service types.

The recommendation policy configuration library described in FIG. 2 is used as an example. In step S300, during initialization, a cloud platform application-orientated service recommendation device reads various recommendation dimension information in the recommendation policy configuration library, to generate the recommendation policy dimensions corresponding to the various services on the cloud platform.

For example, for a database (DB) service, the service recommendation device reads a recommendation dimension of read/write usage, a recommendation policy of a user distribution status, a recommendation policy of DB stability, and the like, to generate a recommendation policy dimension corresponding to the DB service.

For a log (Log) service, the service recommendation device determines, by reading the various recommendation dimensions in the recommendation policy configuration library, Log service-related recommendation policy dimensions such as:
a recommendation policy dimension related to a feature of the Log service, where the dimension includes recommendation dimensions such as a log data type, a log data volume, a log saving time, and a log query function;
a recommendation policy dimension that is of the Log service and universal in a platform, where the dimension includes recommendation dimensions such as stability of the Log service, usage by a user, and a user migration quantity; and
a recommendation policy dimension that is of the Log service and universal in the industry, where the dimension includes recommendation dimensions such as a package price, a newly launched service, and a bidding rank.

Optionally, as shown in FIG. 3, the corresponding recommendation policy dimensions are configured and generated for the various service types on the cloud platform by reading the recommendation policy configuration library in FIG. 2 and by performing step S300.

For example, for a DB service, recommendation policy dimensions of the DB service include recommendation policy dimensions such as read/write usage of a database, stability, usage by the user, and a user migration quantity.

Optionally, recommendation policy dimensions such as stability and a package price are shared by an entire cloud platform. However, focuses of different application types are different. Therefore, weight coefficients of these aspects are different in each service recommendation policy. That is, each service has an independent recommendation policy configuration.

A service recommendation policy used during initial deployment of an application may be different from a service recommendation policy used during dynamic analysis and adjustment. In an embodiment, a major difference lies in that monitoring information of a running status of a service can be obtained only during the dynamic analysis and adjustment, for example, a log data type and a data volume of an application, and a method for using a log service by an application. In an initial deployment process, these policy dimensions are ignored. Accordingly, in the initial deployment process, weight coefficients of these policy dimensions are 0.

S301. Obtain running status information of a service on the cloud platform at a specified time interval.

The service status information includes services respectively used by all applications on the cloud platform and running statuses of the services. Optionally, the service status information may be represented by using running status information of the services and the applications.

Optionally, the running status information of the services and the applications includes binding information of the services and the applications and running information of the services and the applications.

Optionally, binding information of services and applications from a cloud controller and running information of services and applications from a cloud collector may be obtained.

In an embodiment, sampling data from information sources such as the cloud controller and the cloud collector may be received in a message subscription manner. In an embodiment, sampling data from information sources such as the cloud controller and the cloud collector may be obtained in an active query manner.

For example, for a search application, a series of information about a service bound to the search application may be obtained by analysis by periodically obtaining information about the service bound to the application and running information of the application and the service bound to the application. For example, a database service is bound to the search application, and read/write usage, stability, total usage of a user, and the like of the database service may be obtained by analysis in step S301.

S302. Receive a notification message of a newly deployed application from the cloud platform.

Optionally, the message carries attribute information of the newly deployed application.

Optionally, when an application is newly deployed on the cloud platform, the cloud controller sends a notification message to the service recommendation device. The message carries attribute information of the application such as a language stack used by the application and a used framework.

S303. Learn a service type required by the application.

Optionally, the cloud platform application-orientated service recommendation device may learn, according to the attribute information of the new application such as the used language stack and the used framework, a potential service type required for the new application. Generally, a service required by the new application is carried in the attribute information of the new application.

For example, for a search application, a database service required by the search application may be learned by using attribute information of the search application. For example, for a navigation application, a map service required by the navigation application may be learned by using attribute information of the navigation application.

Optionally, the service type required by the application may be further learned by analyzing public code information of the new application.

Optionally, the service type required by the application may be learned by receiving a supplemental message carried in the new application. In an embodiment, a developer of the application may add the service type required for developing the application to the supplemental message of the application.

For example, when developing a navigation application, a developer needs to use a service of a map type. In this case, the developer may add a supplemental message to the application. The supplemental message carries the required service type, for example, a required map service. When the developer deploys the application on the cloud platform, the service recommendation device can learn, according to the supplemental message, the service type required by the application.

S304. Obtain to-be-statistically-collected recommendation policy dimensions according to the recommendation policy dimensions that are corresponding to the various services on the cloud platform and generated in S300, where the to-be-statistically-collected recommendation policy dimensions are recommendation policy dimensions corresponding to the service type required by the application.

For example, if it is learned by using the attribute information of the application in S303 that a database service is required by the application, a recommendation policy dimension that is of the database service and requires analysis can be obtained according to a generation result of S300 (as shown in FIG. 3) in S304. For example, in an embodiment, the recommendation policy dimension that is of the database service and requires analysis includes read/write usage of a database, stability, usage by a user, and a user migration quantity.

It should be noted that, in this embodiment, the recommendation policy dimensions corresponding to the various services on the cloud platform are first generated according to the recommendation policy information of the recommendation policy configuration library. Then, the service type required by the newly deployed application is obtained, and the recommendation policy dimension corresponding to the service type required for the newly deployed application is found from the generated recommendation policy dimensions corresponding to the various services.

Certainly, it is easily understood that, in another embodiment, the service type required by the newly deployed application may be first obtained, and then the target recommendation policy dimensions corresponding to the service type is generated according to the recommendation policy configuration library, as described in the foregoing step S202.

Both the implementation manners can be used, and no particular limitation is imposed.

S305. Obtain a statistical result of each service of the service type in each dimension of the to-be-statistically-collected recommendation policy dimensions according to the service status information on the cloud platform that is obtained in S301.

For example, it is obtained in S304 that the recommendation policy dimension that is of the service type and requires statistical analysis includes read/write usage of a database, stability, usage by a user, and a user migration quantity.

Database service types on the cloud platform include MYSQL, ACCESS, and BD2. A statistical result of each database service of the database service type in each dimension of a recommendation policy dimension that requires statistical analysis may be obtained according to the service status information periodically obtained in S301:
MYSQL service:
   a dimension of read/write usage of a database is: 50% read and 50% write;
   a dimension of stability is: high stability;
   a dimension of usage by a user is: 100 times for use; and
   a dimension of a user migration quantity is: users migrate out and use of this service is stopped 50 times, and users migrate in and this service is used 50 times.
ACCESS service:
   a dimension of read/write usage of a database is: 60% read and 40% write;
   a dimension of stability is: intermediate stability;
   a dimension of usage by a user is: 50 times for use; and
   a dimension of a user migration quantity is: users migrate out and use of this service is stopped 100 times, and users migrate in and this service is used 50 times.
BD2 service:
   a dimension of read/write usage of a database is: 40% read and 60% write;
   a dimension of stability is: high stability;
   a dimension of usage by a user is: 200 times for use; and
   a dimension of a user migration quantity is: users migrate out and use of this service is stopped 50 times; and users migrate in and this service is used 100 times.
S306. Calculate a score in each dimension according to a preset scoring criterion and the statistical result of each service in each dimension that is obtained in S305.

Optionally, during recommendation by the recommendation device, for a service of a database type, a preset scoring criterion of each dimension by default is as follows:
a dimension of read/write usage of a database is: 50% read and 50% write;
a dimension of stability is: high stability;
a dimension of usage by a user is: 100 times for use; and
a dimension of a user migration quantity is: a quantity of users who migrate in needs to be greater than a quantity of users who migrate out.

Certainly, optionally, there may be another different preset scoring criterion. For example, in an embodiment, a preset scoring criterion of a dimension of read/write usage is: use frequency of read needs to be greater than use frequency of write, for example, 50% read and 50% write. No particular limitation is imposed in the present invention.

When a dimension meets the foregoing corresponding preset criterion, a score is 10 points. If a dimension does not meet the foregoing preset criterion, a deduction of a unit of two points is made according to a degree to which the foregoing preset criterion is not met.

In this way, according to the foregoing preset criterion, a score of the statistical result of each service in each dimension that is obtained in S305 is as follows:
MYSQL service:
   a score of a dimension of read/write usage of a database is: 50% read and 50% write - 10 points;
   a score of a dimension of stability is: high stability - 10 points;
   a score of a dimension of usage by a user is: 100 times for use - 10 points;
   a score of a dimension of a user migration quantity is: users migrate out and use of this service is stopped 50 times, and users migrate in and this service is used 50 times - 8 points; and
   total points: 38 points.
ACCESS service:
   a score of a dimension of read/write usage of a database is: 60% read and 40% write - 8 points;
   a score of a dimension of stability is: intermediate stability - 8 points;
   a score of a dimension of usage by a user is: 50 times for use - 6 points;
   a score of a dimension of a user migration quantity is: users migrate out and use of this service is stopped 100 times, and users migrate in and this service is used 50 times - 6 points; and
   total points: 28 points.
BD2 service:
   a score of a dimension of read/write usage of a database is: 40% read and 60% write - 8 points;
   a score of a dimension of stability is: high stability - 10 points;
   a score of a dimension of usage by a user is: 200 times for use - 10 points;
   a score of a dimension of a user migration quantity is: users migrate out and use of this service is stopped 50 times, and users migrate in and this service is used 100 times - 10 points; and
   total points: 38 points.

S307. After the score of each service in each dimension is multiplied by a preset weight, calculate a sum of scores in all dimensions, perform ranking in descending order of total scores after the sum is calculated, and obtain a service recommendation list, where the service recommendation list includes at least one to-be-recommended service.

Optionally, during initial recommendation, the preset weights are balanced, and a weight of each dimension for each service is the same. For example, for the foregoing services, each service has four recommendation dimensions, and a weight of each dimension is 1/4.

Optionally, the weight may be required by a user in advance. For example, a user may care more about stability, and a weight of stability is appropriately higher. For example, a weight of a dimension of a user migration quantity may be 2/5, and weights of the other remaining dimensions each are 1/5.

After the score in each dimension that is obtained in S306 is multiplied by the weight obtained in advance, the services are ranked in descending order of the total scores of the services, to obtain the final service recommendation list.

Optionally, if the weight of each dimension is 1/4, according to S307, ranks of the several services are: the MYSQL service, the BD2 service, and the ACCESS service.

Optionally, if the weight of stability may be 2/5, and the weights of the other remaining dimensions each are 1/5, according to S307, ranks of the several services are as follows:
the BD2 service, the MYSQL service, and the ACCESS.

S308. After the application runs for a preset time, re-collect statistics on the foregoing to-be-statistically-collected recommendation policy dimensions, and obtain an updated analysis result.

After the application runs for a time period, a statistical indicator of each recommendation dimension of a bound service may change. Statistical re-analysis is periodically performed, and a most suitable service is recommended to the user according to a result obtained by performing statistical re-analysis.

A usage characteristic of the application is obtained according to the statistical result after statistics are re-collected. For example, for a search application, it is found, after statistics are re-collected, that the search application frequently reads/writes a database, and a ratio of read to write reaches 7:3.

For example, it is assumed that the user selects the BD2 service, and after the application runs for a time period, it is obtained by re-collecting statistics on dimensions of the services of the database service type that:
MYSQL service:
   a dimension of read/write usage of a database is: 70% read and 30% write;
   a dimension of stability is: high stability;
   a dimension of usage by a user is: 80 times for use; and
   a dimension of a user migration quantity is: users migrate out and use of this service is stopped 70 times, and users migrate in and this service is used 60 times.
ACCESS service:
   a dimension of read/write usage of a database is: 50% read and 50% write;
   a dimension of stability is: intermediate stability;
   a dimension of usage by a user is: 80 times for use; and
   a dimension of a user migration quantity is: users migrate out and use of this service is stopped 70 times, and users migrate in and this service is used 100 times.
BD2 service:
   a dimension of read/write usage of a database is: 40% read and 60% write;
   a dimension of stability is: high stability;
   a dimension of usage by a user is: 100 times for use; and
   a dimension of a user migration quantity is: users migrate out and use of this service is stopped 100 times, and users migrate in and this service is used 100 times.

S309. According to the updated analysis result obtained in S308, re-calculate a score of a recommendation policy dimension of each service of the same type as a service bound to the application, re-calculate a sum according to weights, and obtain and send an updated service recommendation list, where the updated service recommendation list includes at least one to-be-recommended service.

For example, if it is found according to latest running information of the services and the applications that is obtained in S301 that the application cares more about a read operation feature of a database in actual application, the recommendation device needs to compare and arrange the services of the same type according to the latest statistical analysis result in S308, to obtain an updated recommendation list.

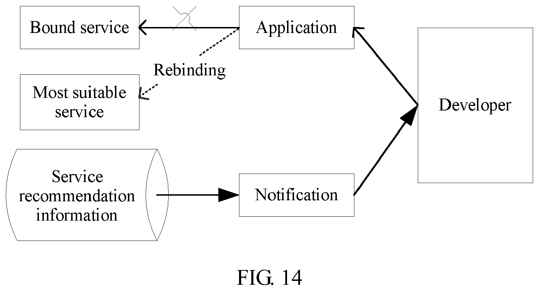

More vividly, the foregoing procedures may be vividly presented by using a schematic scenario diagram of application of this method in FIG. 14.

Optionally, a weight coefficient of each recommendation dimension may be dynamically adjusted. Weight coefficients of some service dimensions may be decreased or increased according to status information of a service and status information of an application.

For example, in a dimension, for example, a stability dimension, if a service encounters a problem such as a collapse or a crash, a weight of the service is decreased in a time period, and therefore a recommendation rank is decreased.

For example, if it is found by statistics collection that the application cares more about a read/write function of a database, a weight corresponding to the read/write function of the database is increased, and therefore a recommendation rank is promoted.

In addition, after an initial rank result is obtained, information such as a workload (a code modification workload/data migration) of migration from a current service to a target service needs to be calculated according to ranks, and the rank result is revised once. For example, if the workload is extremely large, a rank of a corresponding service is decreased.

For example, after the comparison and the arrangement, the MYSQL service cares more about a read operation feature, and updated ranks are the MYSQL service, ACCESS, and the BD2 service according to actual usage of the read operation feature. Obviously, MYSQL is more suitable than the BD2 service for the application.

Optionally, in an embodiment, the service recommendation list may be sent to the user in a manner such as an e-mail, a short message service message, message push, web page push, or client message push. The user determines whether to choose to switch a service according to recommended information.

Optionally, in an embodiment, the recommendation device may select a service with a highest score and send the service with the highest score to the user in a manner such as an e-mail, a short message service message, message push, page push, or client message push.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

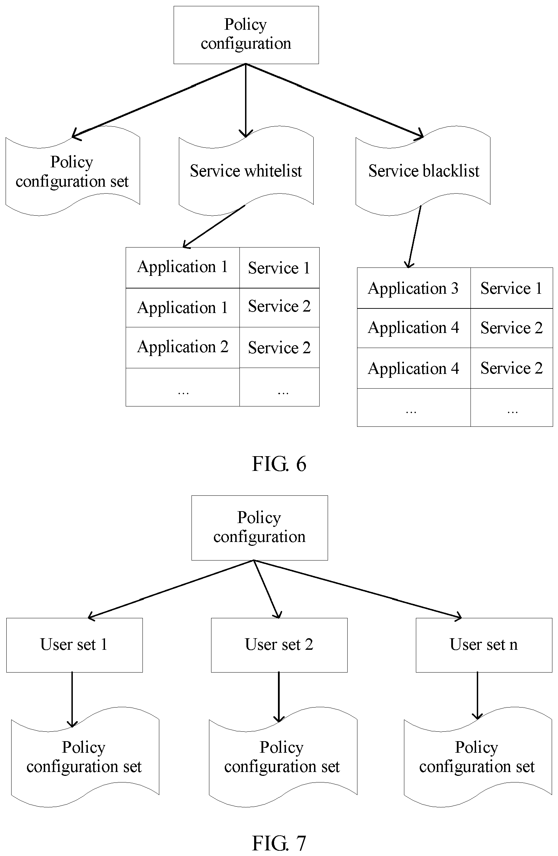

Optionally, in addition to the foregoing recommendation method, in an embodiment, as shown in FIG. 6, an application developer may select a recommended service from a whitelist. Alternatively, a blacklist may be used to screen out some services that the developer is not willing to use.

In this way, the recommendation device selects a service in an application recommendation whitelist or removes a service in the blacklist according to a configuration status of the whitelist and the blacklist.

For example, the recommendation device removes a service in the blacklist from the service recommendation list, or further selects a service in the whitelist from the service recommendation list.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved. Further, the recommended service can better match a personal preference of the developer according to settings of a whitelist and a blacklist.

Optionally, in addition to the foregoing recommendation method, in an embodiment, as shown in FIG. 7, another recommendation policy dynamic configuration solution is provided. The configuration solution is a weight configuration method in which roles are distinguished. Weight configurations of different service dimensions are provided for different application developers.

For example, for a common developer, a weight of a dimension such as a bidding rank or promotion of a newly launched service exists. For an enterprise user/a VIP user, a weight of a dimension such as a bidding rank or promotion of a newly launched service may be properly decreased or canceled, so as to provide service recommendation that is more specific to a characteristic of an application.

During dynamic analysis, differentiated calculation is performed only for each user set. In this case, distributed dynamic analysis calculation may be performed, or overall unified calculation may be performed.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

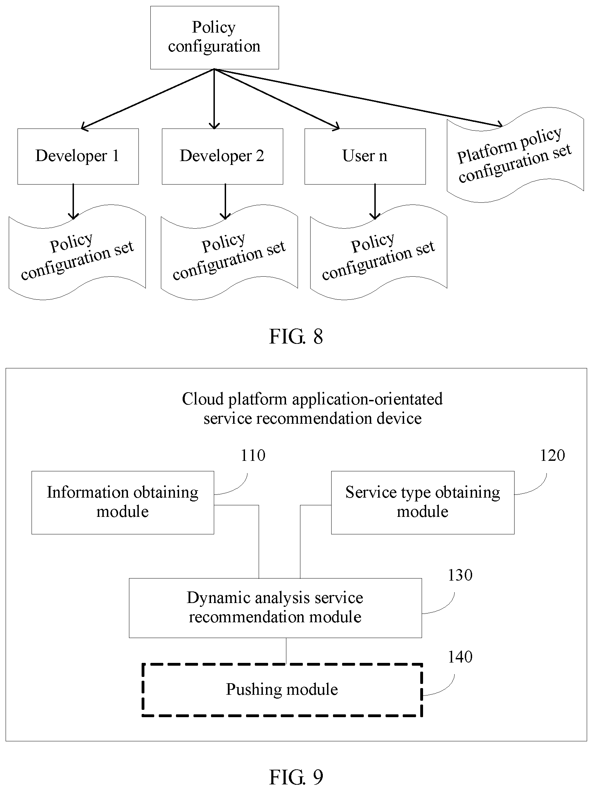

Optionally, in addition to the foregoing recommendation method, in an embodiment, as shown in FIG. 8, another recommendation policy dynamic configuration solution is provided. In this solution, an application developer customizes a service dimension and a weight, and the application developer configures a priority of a dimension that is focused on by a service used by an application deployed by the application developer.

When selecting a service of a specific type, the developer may configure a weight coefficient (platform-grade dimension weights such as promotion and a price, which are not configurable, and a total sum of weights is fixed) of a service feature dimension. Service recommendation is performed according to a focus of a service required by an application evaluated by the developer.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved. In addition, the application developer customizes a service dimension and a weight, and the application developer configures a priority of a dimension that is focused on by a service used by an application deployed by the application developer, so as to better match an application development habit of the developer, and provide a more personalized recommendation solution.

Corresponding to the foregoing method, as shown in FIG. 9, an embodiment of the present invention discloses a cloud platform application-orientated service recommendation device, which is configured to execute the foregoing method. The device includes:
an information obtaining module 110, configured to obtain service status information of a cloud platform, where the service status information includes services respectively used by all applications on the cloud platform and running statuses of the services;
a service type obtaining module 120, configured to obtain a target service type, where the target service type is a service type required by a target application, and the target application is an application that runs on the cloud platform and requires service recommendation; and
a dynamic analysis service recommendation module 130, configured to obtain, according to the service status information of the cloud platform that is obtained by the information obtaining module 110, a service that matches the target service type obtained by the service type obtaining module 120, and use the service as a to-be-recommended service.

In an embodiment, as shown in the dashed line box in FIG. 9, the device may further include:
a pushing module 140, configured to push the to-be-recommended service to a developer of the target application.

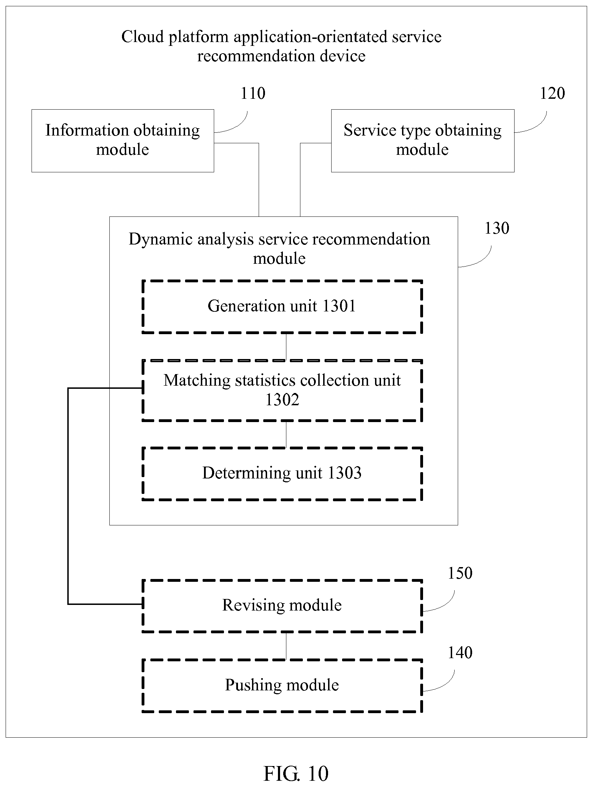

In an embodiment, as shown in FIG. 10, the dynamic analysis service recommendation module 130 includes:
a generation unit 1301, configured to generate, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type;
a matching statistics collection unit 1302, configured to collect, according to the service status information of the cloud platform obtained by the information obtaining module, service status matching score statistics on each service of the target service type in the target recommendation policy dimensions generated by the generation unit 1301, to obtain a service status matching score of each service, where the matching score reflects a degree of matching between a statistical dimension of a running status of each service and the at least one service status statistical dimension included in the recommendation policy dimensions, and a higher matching score indicates a higher degree of matching; and
a determining unit 1303, configured to compare service status matching scores of all services obtained by the matching statistics collection unit 1302, and use a service with a highest matching score as the to-be-recommended service.

In an embodiment, as shown in a dashed line box in FIG. 10, the device may further include:
a revising module 150, configured to calculate a workload of migrating from a currently used service to the to-be-recommended service by the target application, and revise the service status matching score of each service according to a magnitude of the workload, to obtain a revised matching score.

The arrangement unit 1304 is specifically configured to compare revised service status matching scores of all the services obtained by the revising module 150, and arrange the service status matching scores of all the services in descending order.

Optionally, in an embodiment, the generation unit 1301 may generate another recommendation policy dynamic configuration solution. This is a whitelist/blacklist method. An application developer may use a whitelist to select a recommended service only from the whitelist. Alternatively, a blacklist may be used, to screen out some services that the developer is not willing to use, as shown in FIG. 6.

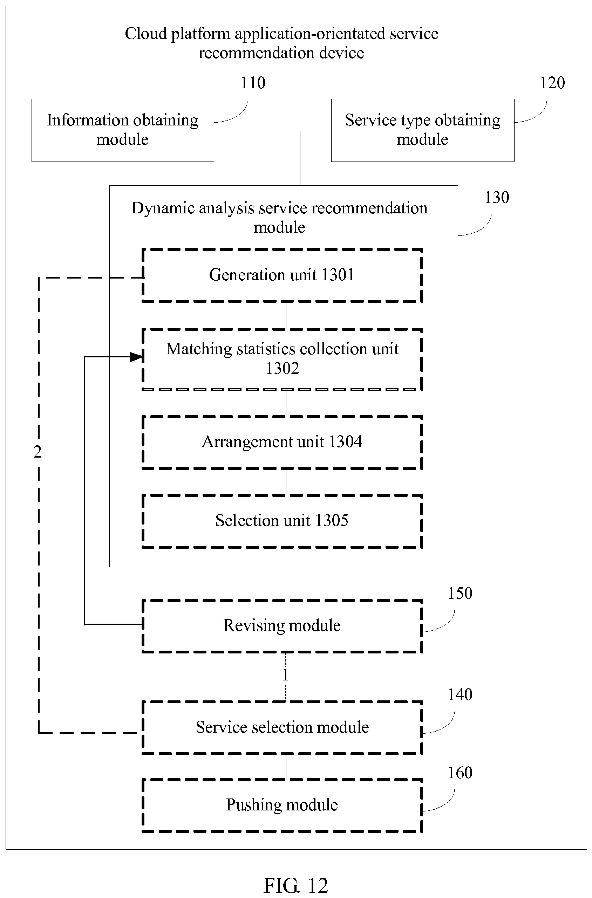

Accordingly, as shown in a dashed line box in FIG. 12, the device may further include:
a service selection module 160, configured to select a service in the whitelist or remove a service in the blacklist according to a configuration status of the blacklist and the whitelist of the generation unit 1301.

Certainly, it is easily understood that, in an embodiment, the service selection module 160 may perform whitelist and blacklist filtering before the operation of the matching statistics collection unit 1302. In this case, the service selection module first performs service filtering according to the blacklist and the whitelist, and then the matching statistics collection unit 1302 performs matching according to a service obtained by filtering, as shown in the dotted connection line 2 in FIG. 12. A matching process is described in detail in description of the foregoing matching statistics collection unit 1302, and details are not described herein.

In another embodiment, the service selection module 160 may perform blacklist and whitelist filtering after the operation of the dynamic analysis service recommendation module 130 and before the operation of the pushing module 140, as shown in the dotted connection line 1 in FIG. 12. In this case, a service finally selected by the service selection module 160 is the to-be-recommended service, and the pushing module 140 pushes the to-be-recommended service to the developer of the target application.

It should be noted that both the service selection module 160 and the revising module 150 may be disposed in the cloud platform application-orientated service recommendation device, or either the service selection module 160 or the revising module 150 may be disposed.

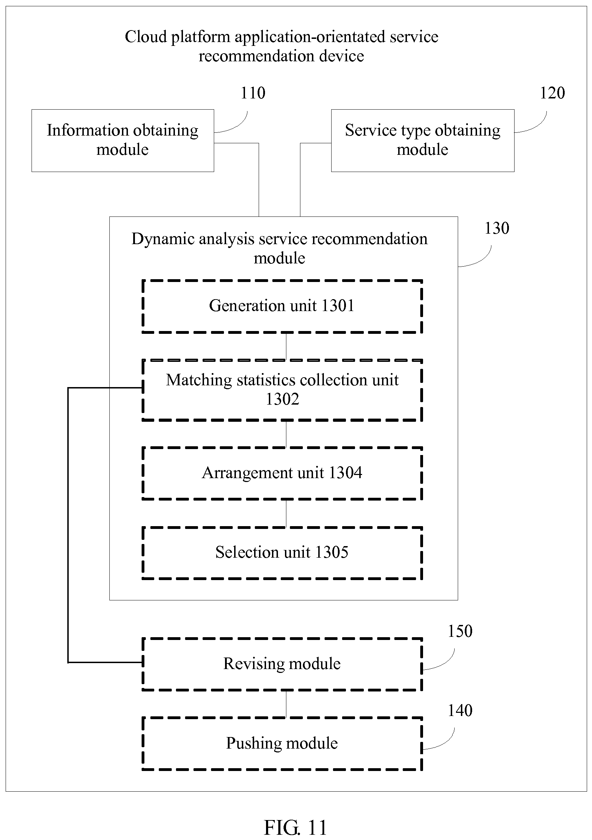

In an embodiment, as shown in FIG. 11, the dynamic analysis service recommendation module 130 includes:
a generation unit 1301, configured to generate, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type;
a matching statistics collection unit 1302, configured to collect, according to the service status information of the cloud platform obtained by the information obtaining module, service status matching score statistics on each service of the target service type in the target recommendation policy dimensions generated by the generation unit 1301, to obtain a service status matching score of each service, where the matching score reflects a degree of matching between a statistical dimension of a running status of each service and the at least one service status statistical dimension included in the recommendation policy dimensions, and a higher matching score indicates a higher degree of matching;
an arrangement unit 1304, configured to arrange, in descending order, service status matching scores of all services obtained by the matching statistics collection unit 1302; and
a selection unit 1305, configured to select, starting from a service with a highest score, at least one service of the target service type as the to-be-recommended service according to the order arranged by the arrangement unit.

In an embodiment, as shown in a dashed line box in FIG. 11, the device may further include:
a revising module 150, configured to calculate a workload of migrating from a currently used service to the to-be-recommended service by the target application, and revise the service status matching score of each service according to a magnitude of the workload, to obtain a revised matching score.

The determining unit 1303 is specifically configured to compare revised matching scores obtained by the revising module 150, and use a service with a highest revised matching score as the to-be-recommended service.

Optionally, in an embodiment, the generation unit 1301 may generate another recommendation policy dynamic configuration solution. This is a whitelist/blacklist method. An application developer may use a whitelist to select a recommended service only from the whitelist. Alternatively, a blacklist may be used, to screen out some services that the developer is not willing to use, as shown in FIG. 6.

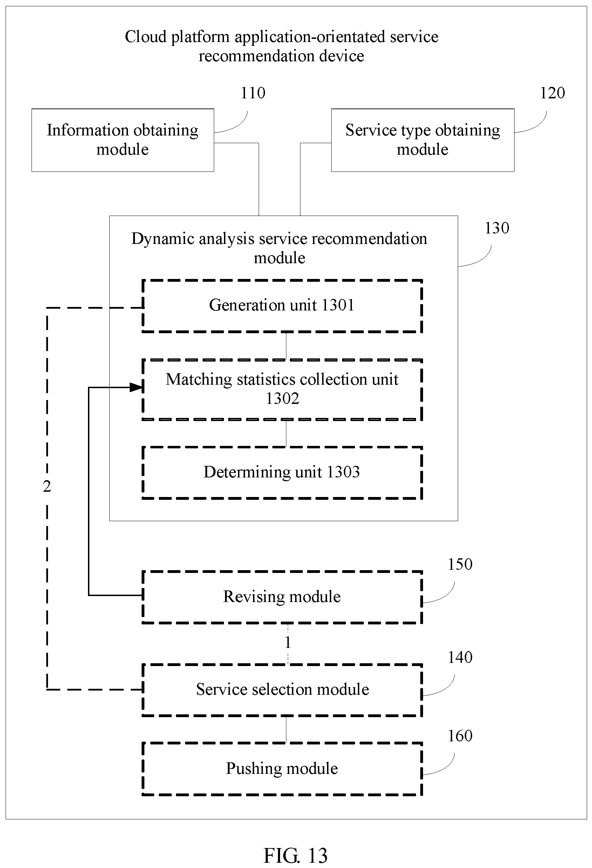

Accordingly, as shown in a dashed line box in FIG. 13, the device may further include:
a service selection module 160, configured to select a service in the whitelist or remove a service in the blacklist according to a configuration status of the blacklist and the whitelist of the generation unit 1301.

Certainly, it is easily understood that, in an embodiment, the service selection module 160 may perform blacklist and whitelist filtering before the operation of the matching statistics collection unit 1302, as shown in the dotted connection line 2 in FIG. 13. In this case, the service selection module first performs service filtering according to the blacklist and the whitelist, and then the matching statistics collection unit 1302 performs matching according to a service obtained by filtering. A matching process is described in detail in description of the foregoing matching statistics collection unit 1302, and details are not described herein.

In another embodiment, the service selection module 160 may perform blacklist and whitelist filtering after the operation of the dynamic analysis service recommendation module 130 and before the operation of the pushing module 140, as shown in the dotted connection line 1 in FIG. 13. In this case, a service finally selected by the service selection module 160 is the to-be-recommended service, and the pushing module 140 pushes the to-be-recommended service to the developer of the target application.

It should be noted that both the service selection module 160 and the revising module 150 may be disposed in the cloud platform application-orientated service recommendation device, or either the service selection module 160 or the revising module 150 may be disposed.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

Further, a blacklist and a whitelist are set, the application developer customizes a service dimension and a weight, and the application developer configures a priority of a dimension that is focused on by a service used by an application deployed by the application developer, so as to better match an application development habit of the developer, and provide a more personalized recommendation solution.

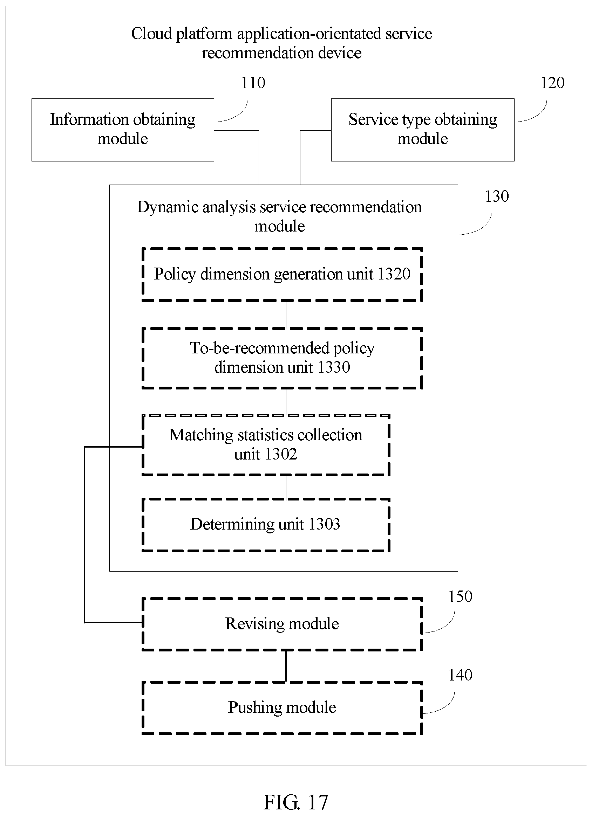

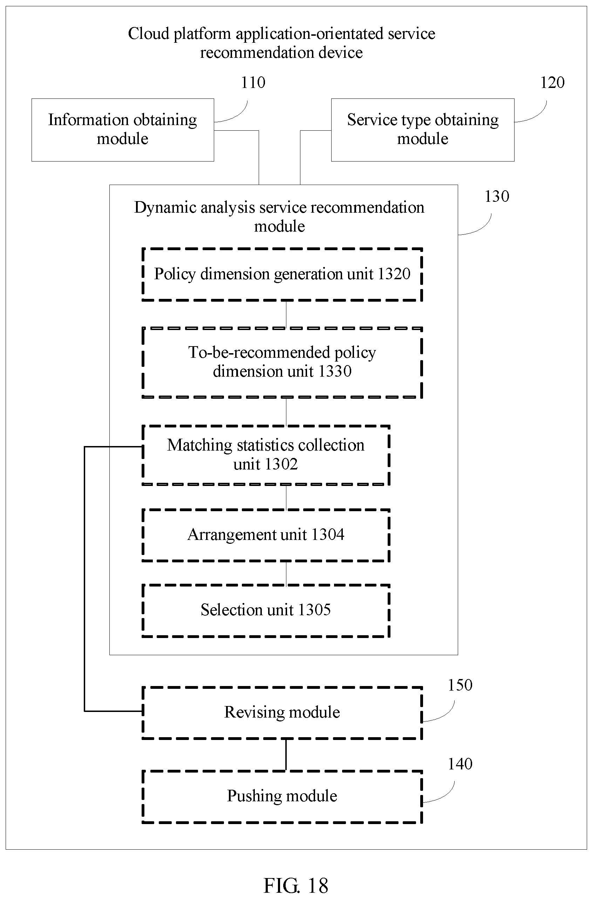

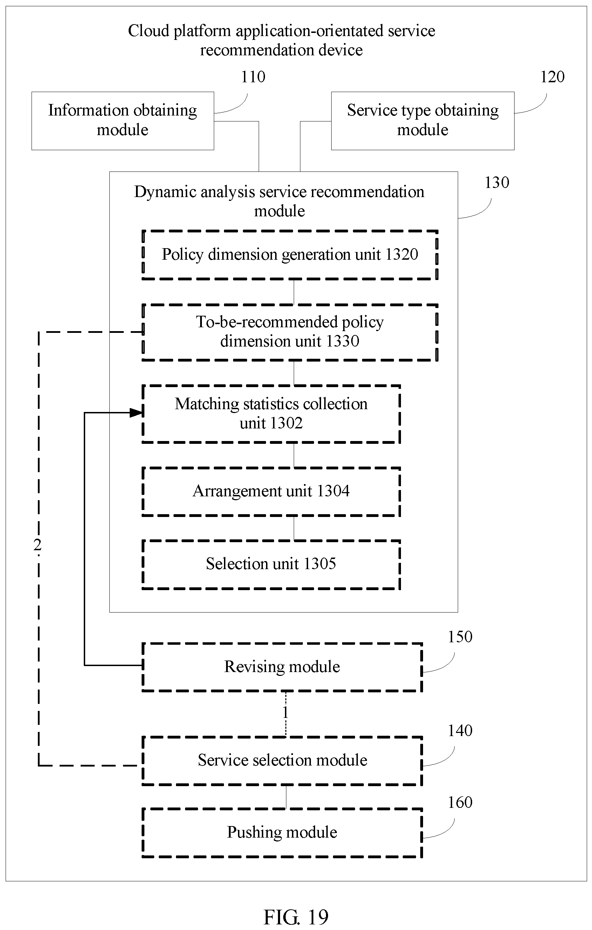

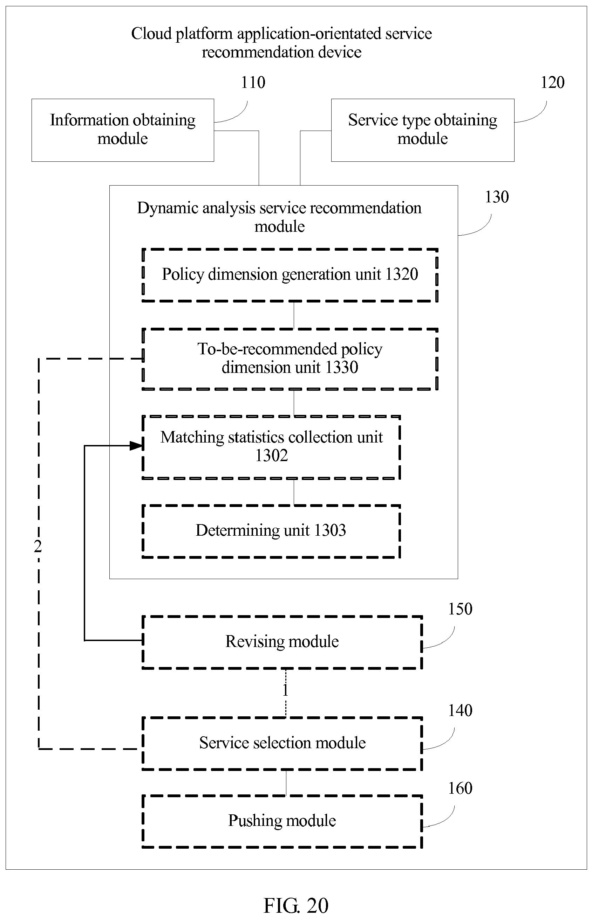

Optionally, as shown in FIG. 17 to FIG. 20, the generation unit 1301 in the device embodiments corresponding to FIG. 10 to FIG. 13 may be replaced with the following two units, and other modules and units remain unchanged:
a policy dimension generation unit 1320, configured to generate, according to a recommendation policy configuration library, recommendation policy dimensions corresponding to various service types on the cloud platform, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type; and
a to-be-recommended policy dimension unit 1330, configured to obtain to-be-statistically-collected recommendation policy dimensions according to the recommendation policy dimensions that are corresponding to the various services on the cloud platform and generated by the policy dimension generation unit 1320, where the to-be-statistically-collected recommendation policy dimensions are recommendation policy dimensions corresponding to the service type required by the application.

For functions of other modules and units, a detailed description is made to the functions of other modules and units, and a link relationship in the device embodiments corresponding to FIG. 10 to FIG. 13, and details are not described herein.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved. In addition, the application developer customizes a service dimension and a weight, and the application developer configures a priority of a dimension that is focused on by a service used by an application deployed by the application developer, so as to better match an application development habit of the developer, and provide a more personalized recommendation solution.

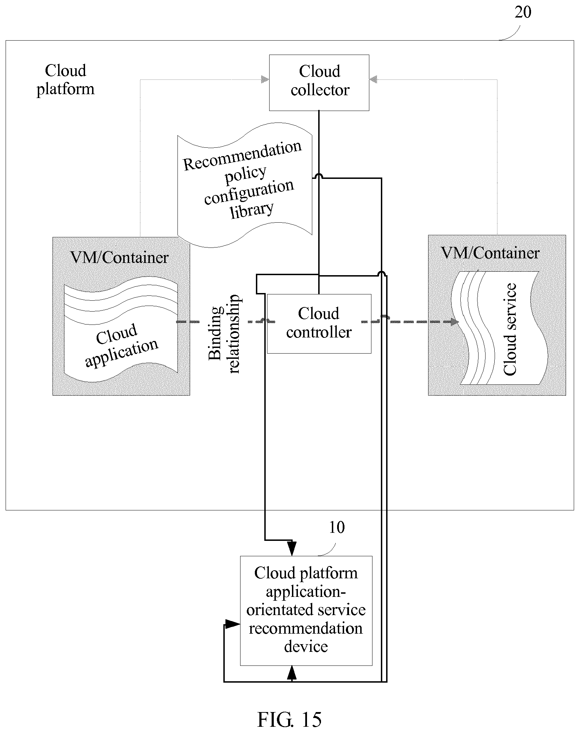

As shown in FIG. 15, an embodiment of the present invention provides a cloud platform application-orientated service recommendation system. The system includes a cloud platform and a cloud platform application-orientated service recommendation device. The cloud platform application-orientated service recommendation device is configured to recommend a service to an application on the cloud platform.

The cloud platform application-orientated service recommendation device is a relatively independent subsystem, and a location on the cloud platform is shown in the figure. A binding relationship between a cloud application and a cloud service on the platform is implemented by using a cloud controller. Running information of the service and the application is sent to an information collector in cloud by using virtual machines/containers hosted by the cloud controller. The service recommendation system collects binding information in the cloud controller and running status information in the cloud collector, and performs analysis to obtain an optimal service of the cloud application according to obtained information.

The cloud platform application-orientated service recommendation device is configured to:
obtain service status information of the cloud platform, where the service status information includes services respectively used by all applications on the cloud platform and running statuses of the services;
obtain a target service type, where the target service type is a service type required by a target application, and the target application is an application that runs on the cloud platform and requires service recommendation; and
obtain, according to the service status information, a service that matches the target service type, and use the service as a to-be-recommended service.

Optionally, the cloud platform application-orientated service recommendation device is specifically configured to:
obtain service status information of the cloud platform, where the service status information includes services respectively used by all applications on the cloud platform and running statuses of the services;
obtain a target service type, where the target service type is a service type required by a target application, and the target application is an application that runs on the cloud platform and requires service recommendation;
generate, according to a recommendation policy configuration library, target recommendation policy dimensions corresponding to the target service type, where the recommendation policy configuration library includes a correspondence between a recommendation policy dimension and a service type, the recommendation policy dimension includes at least one service status statistical dimension, and the service status statistical dimension is used to collect statistics on a degree of matching with a service of the target service type;
collect service status matching score statistics on each service of the target service type in the target recommendation policy dimensions according to the service status information, to obtain a service status matching score of each service, where the matching score reflects a degree of matching between a statistical dimension of a running status of each service and the at least one service status statistical dimension included in the recommendation policy dimensions, and a higher matching score indicates a higher degree of matching; and
compare service status matching scores of all services, and use a service with a highest matching score as the to-be-recommended service; or
arrange service status matching scores of all services in descending order, and select, starting from a service with a highest score, at least one service of the target service type as the to-be-recommended service.

Optionally, when the cloud platform application-orientated service recommendation device is configured to collect service status matching score statistics on each service of the target service type in the target recommendation policy dimensions according to the service status information, to obtain the service status matching score of each service, the cloud platform application-orientated service recommendation device is specifically configured to:
collect service status statistics on each service of the target service type in each dimension of the target recommendation policy dimensions according to the service status information, to obtain a service status of each service in each dimension;
perform scoring calculation on the status of each service in each dimension according to a preset scoring criterion, to obtain a score of each service in each dimension; and
multiply the score of each service in each dimension by a preset weight, and calculate a sum, to obtain the service status matching score of each service in the target recommendation policy dimensions.

In the foregoing technical solutions of this embodiment of the present invention, a service that matches a target service type is obtained according to service status information of a cloud platform, so that costs for learning, evaluating, and using a service by an application developer are reduced, and the application developer obtains, in a timely manner, a service that matches a to-be-developed application, thereby improving application development efficiency. In addition, the matched service is recommended by means of dynamic analysis according to the service status information of the cloud platform, so that a service in use becomes better matched to a usage scenario characteristic of a user, and a degree of matching between the recommended service and a target application is improved.

A person of ordinary skill in the art may understand that all or some of the processes of the methods in the embodiments may be implemented by instructing related hardware by a computer program. The program may be stored in a computer readable storage medium. When the program runs, the processes of the methods in the embodiments are performed. The storage medium may be a magnetic disc, an optical disc, a read-only memory (Read-Only Memory, ROM), a random access memory (Random Access Memory, RAM), or the like.

The foregoing are merely several embodiments of the present invention. A person skilled in the art may make various modifications and variations to the present invention without departing from the spirit and scope of the present invention.

## Claims

1. A cloud platform application-orientated service recommendation method, wherein the method comprises:
obtaining service status information of a cloud platform, wherein the service status information comprises services respectively used by all applications on the cloud platform and running statuses of the services;
obtaining a target service type, wherein the target service type is a service type required by a target application, and the target application is an application that runs on the cloud platform and requires service recommendation; and
obtaining, according to the service status information, a service that matches the target service type, and using the service as a to-be-recommended service.

2. The method according to claim 1, wherein the obtaining, according to the service status information, a service that matches the target service type, and using the service as a to-be-recommended service comprises:
generating, according to a recommendation policy configuration library, target recommendation policy dimensions corresponding to the target service type, wherein the recommendation policy configuration library comprises a correspondence between a recommendation policy dimension and a service type, the recommendation policy dimension comprises at least one service status statistical dimension, and the service status statistical dimension is used to collect statistics on a degree of matching with a service of the target service type;
collecting service status matching score statistics on each service of the target service type in the target recommendation policy dimensions according to the service status information, to obtain a service status matching score of each service, wherein the matching score reflects a degree of matching between a statistical dimension of a running status of each service and the at least one service status statistical dimension comprised in the recommendation policy dimensions, and a higher matching score indicates a higher degree of matching; and
comparing service status matching scores of all services, and using a service with a highest matching score as the to-be-recommended service.

3. The method according to claim 1, wherein the obtaining, according to the service status information, a service that matches the target service type, and using the service as a to-be-recommended service comprises:
generating, according to a recommendation policy configuration library, target recommendation policy dimensions corresponding to the target service type, wherein the recommendation policy configuration library comprises a correspondence between a recommendation policy dimension and a service type, the recommendation policy dimension comprises at least one service status statistical dimension, and the service status statistical dimension is used to collect statistics on a degree of matching with a service of the target service type;
collecting service status matching score statistics on each service of the target service type in the target recommendation policy dimensions according to the service status information, to obtain a service status matching score of each service, wherein the matching score reflects a degree of matching between a statistical dimension of a running status of each service and the at least one service status statistical dimension comprised in the recommendation policy dimensions, and a higher matching score indicates a higher degree of matching;
arranging service status matching scores of all services in descending order; and
selecting, starting from a service with a highest score, at least one service of the target service type as the to-be-recommended service.

4. The service recommendation method according to claim 2 or 3, wherein the collecting service status matching score statistics on each service of the target service type in the target recommendation policy dimensions according to the service status information, to obtain a service status matching score of each service comprises:
collecting service status statistics on each service of the target service type in each dimension of the target recommendation policy dimensions according to the service status information, to obtain a service status of each service in each dimension;
performing scoring calculation on the status of each service in each dimension according to a preset scoring criterion, to obtain a score of each service in each dimension; and
multiplying the score of each service in each dimension by a preset weight, and calculating a sum, to obtain the service status matching score of each service in the target recommendation policy dimensions.

5. The service recommendation method according to claim 2 or 3, wherein after the collecting service status matching score statistics on each service of the target service type in the target recommendation policy dimensions according to the service status information, to obtain a service status matching score of each service, the method further comprises:
calculating a workload of migrating from a currently used service to the to-be-recommended service by the target application, and revising the service status matching score of each service according to a magnitude of the workload, to obtain a revised matching score; and
the comparing service status matching scores of all services, and arranging service status matching scores of all services in descending order comprises:
comparing revised service status matching scores of all the services, and arranging the service status matching scores of all the services in descending order.

6. The service recommendation method according to any one of claims 1 to 5, wherein the method further comprises:
pushing the to-be-recommended service to a developer of the target application.

7. A cloud platform application-orientated service recommendation device, wherein the device comprises:
an information obtaining module, configured to obtain service status information of a cloud platform, wherein the service status information comprises services respectively used by all applications on the cloud platform and running statuses of the services;
a service type obtaining module, configured to obtain a target service type, wherein the target service type is a service type required by a target application, and the target application is an application that runs on the cloud platform and requires service recommendation; and
a dynamic analysis service recommendation module, configured to obtain, according to the service status information of the cloud platform that is obtained by the information obtaining module, a service that matches the target service type obtained by the service type obtaining module, and use the service as a to-be-recommended service.

8. The service recommendation device according to claim 7, wherein the dynamic analysis service recommendation module comprises:
a generation unit, configured to generate, according to a recommendation policy configuration library, target recommendation policy dimensions corresponding to the target service type, wherein the recommendation policy configuration library comprises a correspondence between a recommendation policy dimension and a service type, the recommendation policy dimension comprises at least one service status statistical dimension, and the service status statistical dimension is used to collect statistics on a degree of matching with a service of the target service type;
a matching statistics collection unit, configured to collect, according to the service status information of the cloud platform obtained by the information obtaining module, service status matching score statistics on each service of the target service type in the target recommendation policy dimensions generated by the generation unit, to obtain a service status matching score of each service, wherein the matching score reflects a degree of matching between a statistical dimension of a running status of each service and the at least one service status statistical dimension comprised in the recommendation policy dimensions, and a higher matching score indicates a higher degree of matching; and
a determining unit, configured to compare service status matching scores of all services obtained by the matching statistics collection unit, and use a service with a highest matching score as the to-be-recommended service.

9. The method according to claim 7, wherein the dynamic analysis service recommendation module comprises:
a generation unit, configured to generate, according to a recommendation policy configuration library, target recommendation policy dimensions corresponding to the target service type, wherein the recommendation policy configuration library comprises a correspondence between a recommendation policy dimension and a service type, the recommendation policy dimension comprises at least one service status statistical dimension, and the service status statistical dimension is used to collect statistics on a degree of matching with a service of the target service type;
a matching statistics collection unit, configured to collect, according to the service status information of the cloud platform obtained by the information obtaining module, service status matching score statistics on each service of the target service type in the target recommendation policy dimensions generated by the generation unit, to obtain a service status matching score of each service, wherein the matching score reflects a degree of matching between a statistical dimension of a running status of each service and the at least one service status statistical dimension comprised in the recommendation policy dimensions, and a higher matching score indicates a higher degree of matching;
an arrangement unit, configured to arrange service status matching scores of all services in descending order; and
a selection unit, configured to select, starting from a service with a highest score, at least one service of the target service type as the to-be-recommended service according to the order arranged by the arrangement unit.

10. The method according to claim 8, wherein the device further comprises:
a revising module, configured to calculate a workload of migrating from a currently used service to the to-be-recommended service by the target application, and revise the service status matching score of each service according to a magnitude of the workload, to obtain a revised matching score; and
the arrangement unit is specifically configured to compare revised service status matching scores of all the services, and arrange the service status matching scores of all the services in descending order.

11. The method according to claim 9, wherein the device further comprises:
a revising module, configured to calculate a workload of migrating from a currently used service to the to-be-recommended service by the target application, and revise the service status matching score of each service according to a magnitude of the workload, to obtain a revised matching score; and
the determining unit is specifically configured to compare revised matching scores obtained by the revising module, and use a service with a highest revised matching score as the to-be-recommended service.

12. The service recommendation device according to any one of claims 7 to 11, wherein the device further comprises:
a pushing module, configured to push the to-be-recommended service to a developer of the target application.

13. A cloud platform application-orientated service recommendation system, wherein the system comprises a cloud platform and a cloud platform application-orientated service recommendation device, the cloud platform application-orientated service recommendation device is configured to recommend a service to an application on the cloud platform, and the cloud platform application-orientated service recommendation device is the cloud platform application-orientated service recommendation device according to any one of claims 7 to 12.
